# EUROPEAN PATENT APPLICATION

(11) **EP 1 176 515 A2**
(43) Date of publication of application: **30.01.2002**
(21) Application number: 01304476.3
(22) Date of filing: 22.05.2001
(51) Int. Cl.: G06F 15/78

(54) **Efficient hardware processor sharing**

(30) Priority: 25.07.2000 US 625468
(71) Applicant: LUCENT TECHNOLOGIES INC., Murray Hill, New Jersey 07974-0636 (US)
(72) Inventor: Alireza, Farid Faryar, Fair Haven, New Jersey 07704 (US); Moushumi, Sen, West End, New Jersey y 07740 (US); An, Yan, New Brunswick, New Jersey 08901 (US); Kyeong, Ho Yang, Freehold, New Jersey 07728 (US)
(74) Representative: Watts, Christopher Malcolm Kelway, Dr.

(57) **Abstract**

An efficient hardware architecture and processing method permit pipelined processing stages to be shared in processing samples from a plurality of independent input sequences that are grouped prior to application to the processing arrangement. A high degree of processing engine efficiency and/or reduced delay for accepting new input samples are achieved by applying the signal sequence, {*Y*_{*j*}: *j*=0,1,2,...,*MN*-1}, obtained by interleaving *M* signal sequences {*X*_{*i,j*}: *j*=0,1,2,...,*N*-1}, *i*=1,2,...*M*}. Thus, processing of sample *Y*_{*j*} can start as soon as processing of sample *Y*_{*j-M*} is finished. Accordingly, effective pipeline stage delay, *D*_{*p*}*,* can be reduced by a factor of *M* (from Dₘₐₓ to Dₘₐₓ *IM)* and the number of required engines (or, equivalently, required time) can be reduced by the same factor *M*.

## Description

### Field of the Invention

The present invention relates to efficient sharing of hardware resources, *e.g*., processors, in digital systems. More particularly, the present invention relates to sharing of processors in systems for simultaneously processing independent input data streams. Still more particularly, the present invention relates to efficient pipeline processing for independent input data streams, such as those representing independent graphical images.

### Background of the Invention

Pipeline processing has long proved very useful in reducing the size of hardware and reducing the number of required processors. Generally, pipelining involves some degree of overlapped processing, with one part of a multi-part operation being performed for one data input, while a different part of the same or another multi-part operation is still in progress.

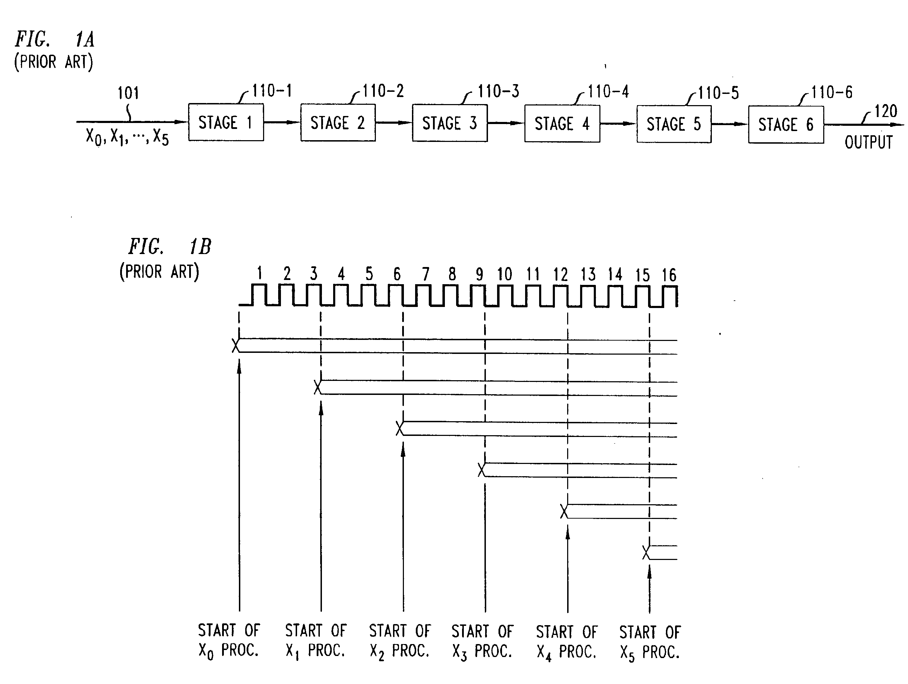

FIG. 1A shows one illustrative application of pipelining known in the art. There, a ordered sequences of inputs X₀, X₁, ..., X₅ are applied at the input 101 of stage 1, 110-1, of a 6-stage processor. X₀ is applied first, X₁ next, and so on, through X₅. In general, the operations performed at stages 110-*i*, *i* = 1, ...,6, are different, but in appropriate cases operations performed at stages 110-i may be the same for some or all *i*. Outputs from the pipelined arrangement of FIG. 1 appear at output node 120.

Pipelining advantages obtain in an arrangement such as that shown in FIG. 1A because processing of a given input sample, say Xⱼ, can be initiated at stage 1 (shown as 110-1 in FIG. 1A), while signals based on preceding inputs, such as Xⱼ₋₁ through Xⱼ₋₅, are undergoing processing in respective later stages 110-*i* of the pipeline shown in FIG. 1A. FIG. 1B shows illustrative timing for processing for each input sample Xⱼ for the example of FIG. 1A. Time is illustratively shown as system clock cycles at the top of the drawing figure. Once processing of the last sample in a given sequence (X₅ in the example of FIG. 1A) is completed at processing stage 110-1, a new sequence can be applied at the input 101.

A pipeline processing stage, such as illustrative stage 110-i is characterized by *D*_{*p*}, the time (or number of clock cycles) required to process an input (also conveniently referred to as a *sample*), Xⱼ, or output of a preceding state based (directly or indirectly) on such a sample. Alternatively viewed, *D*_{*p*} is the time delay or waiting time (measured from the beginning of processing of a current sample, such as Xⱼ) before processing of the immediately following sample, Xⱼ₊₁ can begin. Because pipelined processing stages are cascaded in the manner of FIG. 1A, *D*_{*p*} for each processing stage depends not only on *its* characteristics and the task it is assigned, but also on the maximum waiting time, *D*_{*max*}, for all processing stages in the pipeline. Thus, if any processing block 110-*i* requires Dₘₐₓ cycles before starting processing of the next following input, Dₚ for any other stage cannot be smaller than Dₘₐₓ. That is, inputs to each stage in the pipeline of FIG. 1 are determined by the *worst case* value of Dₚ for any stage in the pipeline, *i*.*e*., D*max*.

Therefore, if Dₘₐₓ is large, then pipeline processing may not be appropriate for dedicated hardware implementations because stages requiring a time appreciably less than Dₘₐₓ to complete required operations will stand idle for considerable time periods. Such large values for Dₘₐₓ typically occur when a processing algorithm requires a feedback input in processing input samples or processing of results from another processing stage.

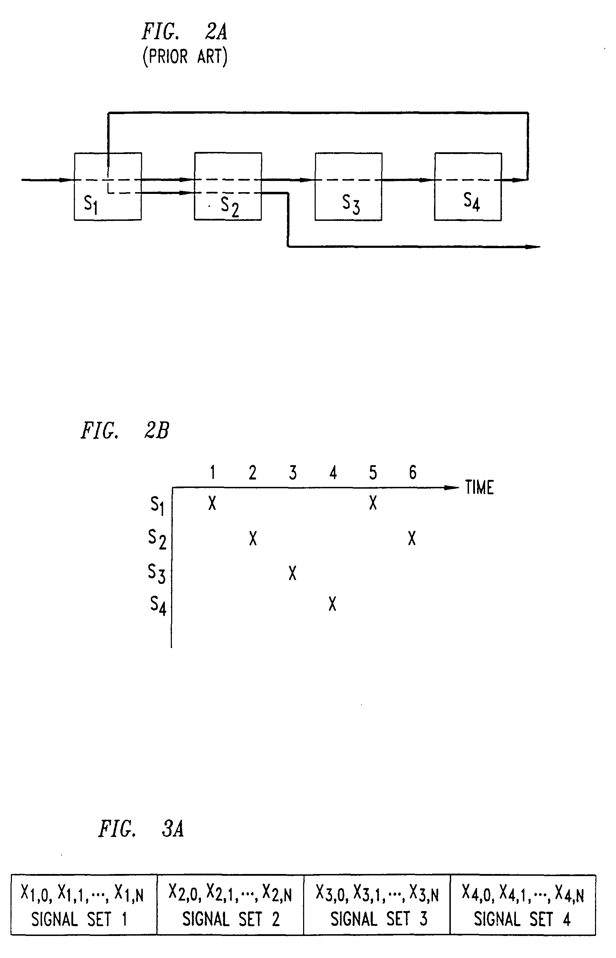

FIG. 2A shows an illustrative pipelined processing arrangement involving feedback from a stage (S4) to another stage (S1). Moreover, the arrangement of FIG. 2A, which is based on an example presented in a section entitled "Pipelined and Vector Processors" in the book by J-L Baer entitled *Computer Systems Architecture,* Computer Science Press, Rockville, Md., 1980, pp. 500-506, shows the output taken from stage S2.

FIG. 2B shows a matrix illustrating the manner in which processor stages S₁-S₄ of FIG. 2A are scheduled for execution of a multi-stage instruction. Thus, with time again appearing at the top of the figure, FIG. 2B shows (by an X in the column for each time slot) that S₁ is active in time slots 1 and 5, S₂ active in time slots 2 and 6, and stages S₃ and S₄ are active only in time slots 3 and 4, respectively. Operands presented to stages S₁ and S₂ will generally be different when used in time slots 1 and 5 (for S₁) and time slots 2 and 6 (for S₂). As will be appreciated from even the simple example of FIGs. 2A and 2B, pipelined arrangements including feedback paths can introduce considerable scheduling complexity and potential inefficiencies arising from idle processing stages.

As one example of signal processing that can potentially introduce complexity into pipelined processing arrangements known in the prior art, it proves useful to consider near-lossless image compression algorithms based on the JPEG-LS standard See, for example, *Lossless and near-lossless coding of continuous tone still images (JPEG-LS), ISO/IEC JTC*1*/SC* 29/*WG* 1, *July* 1997. Such algorithms typically require that a reconstructed value for an immediately preceding sample be available before encoding of a current sample can begin.

If it is required to finish processing of all given signals (or sets of samples) in a fixed time using a pipelining approach, it may prove necessary using prior techniques to have many processing engines with which to process samples in parallel. On the other hand, in certain applications, multiple signals may require independent processing in accordance with the same processing algorithm, *e*.*g*., there may be many images (or image components) to be encoded (or decoded) using a particular compression scheme.

### Summary of the Invention

Limitations of the prior art are overcome and a technical advance is achieved in accordance with the teachings of the present invention, illustrative embodiments of which are presented in the following detailed description.

In accordance with one aspect of the present invention, an efficient hardware architecture and processing method permit processing stages to be shared among multiple input signal sequences that are to be processed independently. In one illustrative embodiment of the present invention samples from a plurality of independent input sequences are grouped for application to a pipelined processor to achieve a high degree of processing engine efficiency and/or reduced delay for accepting new input samples. System organization and operations in accordance with illustrative embodiments of the present invention thereby reduce the number of required processing engines (or reduce required processing time) by efficiently sharing a processing engine among multiple signals in a pipeline structure.

- Such efficiencies are achieved in accordance with an aspect of present inventive teachings by avoiding use of information about samples in other signal sample sequences when prodcessing samples in a given sequence. More particularly, it proves advantageous to apply pipeline processing to an multiplexed (interleaved) signal sequence, {*Y*_{*j*}: *j*=0,1,2,...,*MN*-1*)*, obtained by interleaving *M* signal sequences {*X*_{*i,j*}: *j*=0,1,2, ...,*N*-1}, *i*=1,2,...*M*. Using present inventive teachings, processing of such a multiplexed sequence permits identical but independent processing of each of the *M* constituent sequences while reducing the overall time and/or system hardware. In operation, processing of input sample *Y*_{*j*} will start as soon as processing of sample *Y*_{*j-M*} is finished. Accordingly, *D*_{*p*} can be reduced by a factor of *M* (from Dₘₐₓ to Dₘₐₓ */M)* and the number of required engines (or, equivalently, required time) can be reduced by the same factor *M.* So, if Dₘₐₓ = 12 (clock cycles or other unit of time) and M = 6, a value of 2 can be achieved for *D*_{*p*}, for an 83% reduction in the number of processing engines (or processing time).

### Brief Description of the Drawing

The above-summarized aspects and features of the present invention will be more completely understoood upon consideration of the following detailed description when read in light of the attached drawing, wherein:
FIG. 1A shows an illustrative prior art pipeline arrangement.
FIG. 1B shows illustrative timing associated with the prior art pipeline arrangement of FIG. 1A.
FIG. 2A shows another prior art pipeline arrangement including feedback between pipeline stages.
FIG. 2B shows a schedule for stage activities for the pipelined arrangement of FIG. 2A.
FIG. 3A shows illustrative signal sets useful in illustrative embodiments of the present invention.
FIG. 3B shows an illustrative pipelined processing arrangement in accordance with an aspect of the present invention.
FIG. 3C shows illustrative timing for processing signal sets, such as those illustrated in FIG. 3A, in a processor of the type shown in FIG. 3B in accordance with illustrative embodiments of the present invention.

### Detailed Description

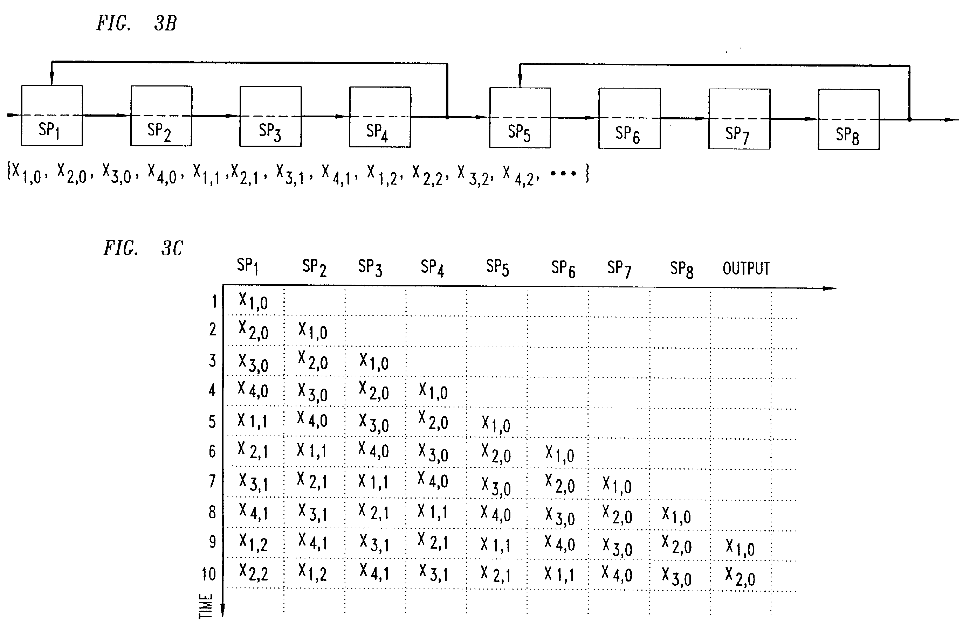

FIG. 3A shows an example of a collection of signal sets to be applied sequentially to the illustrative pipeline architecture of FIG. 3B. Each signal set in FIG. 3A includes samples from each of M independent data streams, where in the example of FIG. 3A, M = 4. Each of the M data streams will, *e*.*g*, relate to an independent source, such as an independent image to be encoded using a selected image coding algorithm, and, in any event will be subject to independent processing in the arrangement of FIG. 3A.

In all cases, however, the selected algorithm will be the same for each of the independent data streams.

Thus, for each independent data stream, a number of algorithm steps, such as (i) determining a difference between a current sample value and a predicted value for that current sample, (ii) quantizing this difference, (iii) entropy coding the quantized difference signal, and (iv) reconstructing a value useful in deriving a subsequent predicted value. These and other algorithms, or parts of algorithms, are represented symbolically in FIG. 3B by processing stages such as SP1 through SP4. In some algorithms with which the present inventive techniques may be used, the output of a step such as the just-recited step (iv) will result in a value that will be used with a following sample from the same input sequence.

The signal sets shown in FIG. 3A are illustratively derived by interleaving (multiplexing) each of M data streams on a sample-by-sample basis into a single data stream and then forming a signal set from each of four consecutive samples. Multiplexing generally of this type is known, *e*.*g*., in a variety of communications transmission systems. Each of the signal sets thus formed is then applied to the illustrative pipeline arrangement of FIG. 3B.

That is, the signal sequence {*Y*_{*k*}: *k* = 0, 1, 2, ..., *MN*-1} obtained by interleaving *M* signals {*X*_{*i,j*}: *j*=0,1,2,...,*N*-1*; i*=1,2,...*M*}, is applied at the input to a first pipeline stage (SP 1) in the illustrative arrangement of FIG. 3B. Here, *j* is the index for the sample in a given sequence (or source), and *i* is the index identifying the respective sequences (or sources). As noted earlier, the present inventive arrangements allow processing of the sample *Y*_{*k*} as soon as processing of the sample *Y*_{*k-M*} is finished.

Turning then to FIG. 3B, a plurality (illustratively 8) of signal processing stages, SP through SP8, is shown in a cascaded arrangement - with feedback paths connected from SP4 and SP8 to SP1 and SP5, respectively. Such feedback paths will, for example, permit the output of a processing stage such as SP4 to pass (directly or via intermediate stages) to a subsequent set of processing stages (*e.g.*, SP5 through SP8) as well to provide a feedback input to SP1 upon the arrival of a following sample from the same sequence that gave rise to the fed back output from SP4. The above-noted *reconstructed values* described in the incorporated patent application cited above provides an example of a value fed back for use at an earlier processing stage upon the arrival of a subsequent sample from the same sequence or source.

FIG. 3C shows an illustrative timing diagram helpful in understanding illustrative processing of input samples from the interleaved (multiplexed) sequence Yₖ. Based on an illustrative value of M = 4, and the number of stages shown, FIG. 3C shows the time (in arbitrary time units) at which processing based on a particular input sample proceeds. Thus in the time interval *1* (assuming the sequence Yₖ has just been applied to the configuration of FIG. 3B), processing of input sample X_{1,0} (the first sample in the 0th sequence) takes place at processing stage SP1; in time interval *2*, processing of input sample X_{2.0} takes place at SP1. While X_{2,0} is being processed in SP1 during time interval 2, processing based on X_{1,0} (using the output of SP1 at the end of time interval 1) during time interval 2 is underway in SP2. The processing of other input samples, both in original form at the input to SP1 and at other stages (using outputs of respective immediately preceding stages in each case), is shown in the timing diagram of FIG. 3C.

For the illustrative configuration of FIG. 3B, it will be recognized that at startup (before the pipeline is full, at least through SP4), SP1 will have only inputs Yₖ. Once processing has been under way for some time, however, outputs from SP4 will also be applied to SP1. In like manner, outputs from SP8 will be applied to SP5 in due course.

Using the approach described in connection with FIGs. 3A-C, the value *D*_{*p*} is effectively reduced by a factor of *M* (from Dₘₐₓ to Dₘₐₓ /*M*), thus reducing the number of required processing engines (or, equivalently, required time) by the same factor. For the case illustrated in FIGs. 3A-C (where M = 4), and assuming a value of Dₘₐₓ = 12, *D*_{*p*} is effectively reduced to 3, thus providing a 75 % reduction in the number of processing engines required.

As noted above, present inventive techniques, including grouping of samples from independent data streams in the manner described and supplying the composite sequence to a pipelined processing arrangement will be applied to applications such as the hardware design of video coding algorithms for HDTV signals. In a typical application to that context, input samples rates will be very high (*e*.*g*., 125 Mega-samples per second). If a processing algorithm requires *D*_{*p*} = 12, and the clock rate of a processing engine is 37.25 MHz, approximately 48 seconds will illustratively be required to process HDTV frames of one second with one processing engine.

Therefore, to process the signal in real time, it has proven convenient to divide a frame into a number (illustratively forty-eight) of parts (each called a *slice)* and to process such slices in parallel with different engines, a potentially expensive undertaking. In such contexts, present inventive techniques can be applied by illustratively causing a plurality (illustratively six) of slices to be processed by the same processing engine, thereby reducing the number of required engines to eight. In this context, members of each chosen set of six slices will have the required independence, *i*.*e*., processing of samples in a particular input sequence (before interleaving) will not require inputs based on samples in any of the other five remaining sequences (also before interleaving).

Present inventive teachings will also be applied to processing of image data streams from many sources, provided that processing of each stream proceeds in accordance with the same algorithm. Those skilled in the art will recognize that present inventive techniques will be applied to independent processing of multiple color components, *i*.*e*., YUV or RGB. While cited examples of use of the present inventive techniques have emphasized encoding, it will be understood by those skilled in the art that this approach is equally appropriate for decoding of multiple data sequences, provided that each can be treated as an independent sequence for which the same decoding algorithm is to be employed.

Further, while image processing has been used to illustrate enhanced pipeline processing in accordance with the present invention, those skilled in the art will recognize that present inventive teachings will be applied to a variety of contexts in which a plurality of input data streams are subjected to independent processing in accordance with a substatially identical processing algorithm.

## Claims

1. A method for processing a plurality of time ordered sequences of samples comprising
multiplexing samples from said plurality of sequences to produce a multiplexed sequence of signals, and
applying said multiplexed sequence of signals to a pipelined processing arrangement for processing each of said plurality of sequences in accordance with a substantially identical algorithm.

2. The method of claim 1 wherein said plurality of time ordered sequences comprises M time ordered sequences.

3. The method of claim 2 wherein each of said plurality of time ordered sequences comprises a plurality of image data sequences.

4. The method of claim 3 wherein each of said image data sequences comprises an HDTV image sequence.

5. The method of claim 3 wherein each of said image data sequences comprises a JPEG image data sequence.

6. The method of claim 2 wherein said M time ordered sequences are processed independently, with no processing results relating to a particular time ordered sequence being required for processing of any other time ordered sequence.

7. The method of claim 1 wherein, for each set of N samples in each of said plurality of time ordered sequences, said multiplexed sequence of samples, Yₖ, comprises{*Y*_{*k*}: *k =* 0, 1, 2, ... , *MN*-1 } samples obtained by interleaving *M* signals {*X*_{*i,j*}: *j*=0,1,2,...,*N*-1*; i=*1,2,...*M*}, where, j is the index for samples in a particular sequence of time ordered samples, and i is the index identifying the particular sequence.

8. A pipelined processing arrangement comprising
a plurality of cascaded processing stages, each configured to perform a predetermined operation on a presented set of operands,
a multiplexer for receiving a plurality of time ordered sequences and generating an ordered multiplexed sequence of samples, said multiplexed sequence of samples, Yₖ, comprising( *Y*_{*k*}: *k =* 0, 1, 2, ..., *MN*-1 } samples obtained by interleaving *M* signals {*X*_{*i,j*}; *j*=0,1,2,...,*N*-1; *i*=1,2,...*M*}, where, *j* is the index for samples in a particular sequence of time ordered samples, and *i* is the index identifying the particular sequence, and
applying said multiplexed sequence of samples to the first of said plurality of processing stages.

9. The processing arrangement of claim 8, wherein said plurality of processing stages independently processes each of said plurality of time ordered sequences of samples.
